# EUROPEAN PATENT APPLICATION

(11) **EP 2 523 426 A1**
(43) Date of publication of application: **14.11.2012**
(21) Application number: 11731780.0
(22) Date of filing: 04.01.2011
(51) Int. Cl.: H04M 1/00, G06F 3/048, G09G 3/20, G09G 5/00, G09G 5/10, G09G 5/22, G09G 5/36

(54) **PORTABLE INFORMATION TERMINAL AND IMAGE DISPLAY CONTROL METHOD**

(30) Priority: 07.01.2010 JP 2010002066
(71) Applicant: NEC Corporation, Tokyo 108-8001 (JP)
(72) Inventor: ZHOU, Yifeng, Tokyo 108-8001 (JP)
(74) Representative: Vossius & Partner
(86) International application number: PCT/JP2011/050011
(87) International publication number: WO 2011/083782

(57) **Abstract**

A portable information terminal includes: a first housing including display section 12; a second housing connected to the first housing, an open angle that is an angle formed by the second housing and a plane of display section 12 being changeable; angle detection section 11 whose output value changes according to a operation in which the first housing and the second housing are opened or closed; and control section 10 that causes display section 12 to execute a first display process if the output value of angle detection section 11 is equal to or greater than a threshold and to execute a second display process if the output value is less than the threshold. One of the first display process and the second display process includes a process that causes information displayed on display section 12 to become illegible compared to information displayed on display section 12 that executes the other display process.

## Description

### TECHNICAL FIELD

The present invention relates to a portable information terminal such as a portable telephone, a PDA (Personal Digital Assistant), or an electronic notebook that has a display screen, in particular, to a folding type portable information terminal.

### BACKGROUND ART

When a person who uses a portable information terminal located in station premises or in a train watches information displayed on its screen, another person may peep at the information. Since information displayed on the screen may be private, an effective way to protect the privacy of the viewer is to provide the portable information terminal with a function that prevents others from peeping.

Patent Literature 1 discloses a portable information processing device that can prevent others from peeping. This portable information processing device has display means, range decision means that decides the range for an area to be hidden (target range) of a display area of the display means, and display control means that performs a process that hides display information in the range decided by the range decision means (mask process or the like).

The range decision means is provided with a touch area having the same size as the display area of the display means. When the user designates a range on the touch area by using one's fingers or the like, information of coordinates in the designated range on the touch area is supplied from the range decision means to the display control means. The display control means identifies the target range on the display area based on the information of coordinates. When the user designates the range of secret information to be hidden to other persons as a target range, he or she can hide the secret information.

### RELATED ART LITERATURE

### PATENT LITERATURE

Patent Literature 1: JP2009-122279A, Publication

### SUMMARY OF THE INVENTION

With the portable information processing device presented in Patent Literature 1, whenever secret information that is to be kept hidden from others is displayed, the user needs to decide the target range in which the secret information is displayed on the touch area. The operation that decides the target range is very bothersome for the user.

In addition, since the operation that decides the foregoing target range is not a common operation, the user needs to learn the operation procedure. Thus, a person who is not accustomed to such a procedure feels very uncomfortable with respect to its operability.

An object of the present invention is to provide a portable information terminal and a screen display control method that execute a peeping prevention process corresponding to a user's simple operation.

To accomplish the foregoing object, a portable information terminal according to the present invention includes:
a first housing including a display section;
a second housing which is connected to the first housing, an open angle that is an angle formed by the second housing and a plane of the display section being changeable;
detection means whose output value changes according to an operation in which the first housing and the second housing are opened or closed; and
a control section that causes the display section to execute a first display process if the output value of the detection means is equal to or greater than a threshold and to execute a second display process if the output value is less than the threshold,
wherein the first display process or the second display process includes a process that causes information displayed on the display section to become illegible compared to information displayed on the display section that executes the other display process.

A screen display control method according to one aspect of the present invention is a screen display control method for a portable information terminal which includes: a first housing including a display section; and a second housing which is connected to the first housing, an open angle that is an angle formed by the second housing and a plane of the display section being changeable, the screen display control method comprising:
detecting an open angle of the first housing and the second housing;
causing the display section to execute a first display process if the detected open angle is equal to or greater than a threshold; and
causing the display section to execute a second display process if the detected open angle is less than the threshold,
wherein the first display process or the second display process includes a process that causes information displayed on the display section to become illegible compared to information displayed on the display section that executes the other display process.

A screen display control method according to another aspect of the present invention is a screen display control method for a portable information terminal which includes: a first housing including a display section; and a second housing which is connected to the first housing, an open angle that is an angle formed by the second housing and a plane of the display section being changeable, the screen display control method comprising:
detecting an opening/closing speed of the first housing and the second housing;
causing the display section to execute a first display process if the detected opening/closing speed is equal to or greater than a threshold; and
causing the display section to execute a second display process if the detected opening/closing speed is less than the threshold.
wherein the first display process or the second display process includes a process that causes information displayed on the display section to become illegible compared to information displayed on the display section that executes the other display process.

### BRIEF DESCRIPTION OF DRAWINGS

Fig. 1 is a block diagram showing a structure of a portable information terminal according to a first exemplary embodiment of the present invention.
Fig. 2 is a schematic diagram showing the appearance of the portable information terminal according to the first embodiment of the present invention.
Fig. 3 is a flow chart showing a procedure for a display illegibility control performed by the portable information terminal shown in Fig. 1.
Fig. 4 is a block diagram showing a structure of a portable information terminal according to a second exemplary embodiment of the present invention.
Fig. 5 is a flow chart showing a procedure for a display illegibility control preformed by the portable information terminal shown in Fig. 4.
Fig. 6 is a block diagram showing a structure of a portable information terminal according to a third exemplary embodiment of the present invention.
Fig. 7 is a schematic diagram showing an example of an open angle vs. display process level correlation table used in the portable information terminal shown in Fig. 6.
Fig. 8 is a flow chart showing a procedure for a display illegibility control performed by the portable information terminal shown in Fig. 6.
Fig. 9 is a block diagram showing a structure of a portable information terminal according to a fourth exemplary embodiment of the present invention.
Fig. 10 is a flow chart showing a procedure for a display illegibility control performed by the portable information terminal shown in Fig. 9.
Fig. 11 is a block diagram showing a structure of a portable information terminal according to a fifth exemplary embodiment of the present invention.
Fig. 12 is a schematic diagram showing an example of an opening/closing speed vs. display process level correlation table used in the portable information terminal shown in Fig. 11.
Fig. 13 is a flow chart showing a procedure for a display illegibility control performed by the portable information terminal shown in Fig. 11.
Fig. 14 is a block diagram showing a structure of a portable information terminal according to a sixth exemplary embodiment of the present invention.
Fig. 15 is a flow chart showing a procedure for a display illegibility control performed by the portable information terminal shown in Fig. 14.
Fig. 16 is a block diagram showing a structure of a portable information terminal according to a seventh exemplary embodiment of the present invention.
Fig. 17 is a flow chart showing a procedure for a display illegibility control performed by the portable information terminal shown in Fig. 16.

### DESCRIPTION OF REFERENCE NUMERALS

- 10: Control section
- 11: Angle detection section
- 12: Display section

### BEST MODES THAT CARRY OUT THE INVENTION

### (First Exemplary Embodiment)

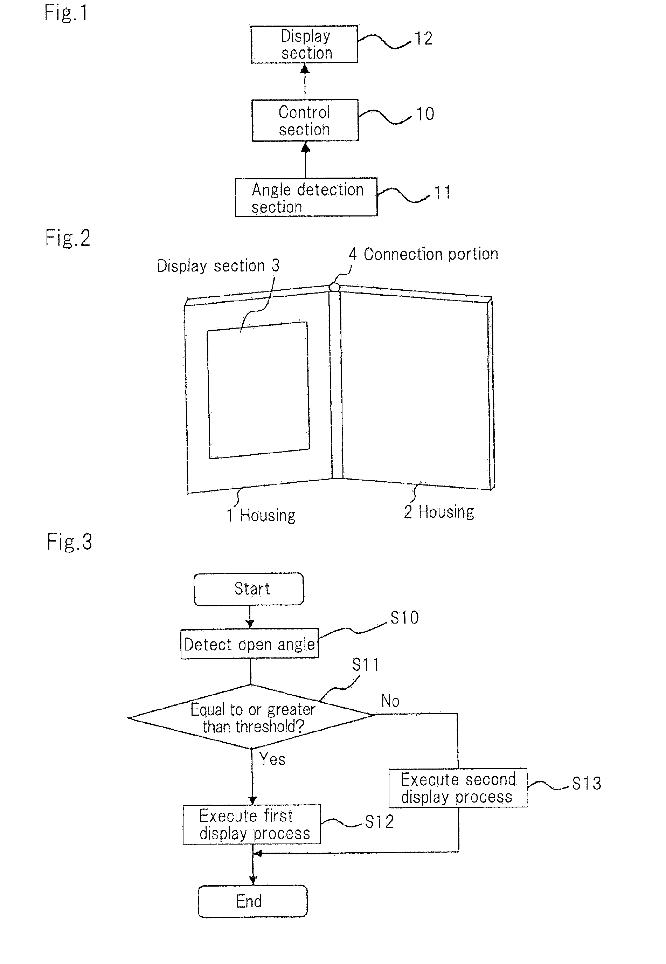

Fig. 1 is a block diagram showing a structure of a portable information terminal according to a first exemplary embodiment of the present invention; Fig. 2 is a schematic diagram showing the appearance of the portable information terminal.

The portable information terminal according to this embodiment is a folding type portable information terminal (for example, a PDA, an electronic notebook, or a portable phone). As shown in Fig. 2, the portable information terminal includes: housing 1 including display section 3; and housing 2 which is connected to housing 1 through connection portion 4. Display section 3 is a display device including a flat panel typified by a liquid crystal panel.

Connection portion 4 allows an open angle between a plane of display section 2 on housing 1 and a plane opposite to display section 2 on housing 2 to be steplessly or stepwise changed and holds housings 1 and 2 at any desired open angle. Connection portion 4 is composed of, for example, a hinge.

In addition, as shown in Fig. 1, the portable information terminal according to this embodiment includes: angle detection section 11 that detects the open angle of housings 1 and 2; and control section 10 that controls display section 3 that displays information and display illegibility corresponding to the open angle detected by angle detection section 11. Control section 10 is located in any one of housings 1 and 2.

Angle detection section 11 is detection means whose output value changes corresponding to the opening/closing operation of housings 1 and 2. Angle detection section 11 is composed of an opening/closing sensor that outputs a signal that indicates that the open angle of housings 1 and 2 exceeds a predetermined angle or an angle detection sensor that detects the open angle of housings 1 and 2 (for example, a rotary encoder mounted on the axis of the hinge).

Control section 10 determines whether or not the open angle of housings 1 and 2 is equal to or greater than a predetermined angle based on the output signal of angle detection section 11 and controls display illegibility of display section 3 corresponding to the determined result. The display illegibility control is a control that changes the display process between a first display process and a second display process. The second display process causes display information (for example, characters, photo, graphic, or table) to become illegible.

The first display process is a normal display process. The second display process is, for example, a process that decreases the brightness of the screen, a process that decreases the size of display information, or a process that hides display information. A process of a combination of at least one of such processes is used as the second display process. The process that hides display information includes a process that converts characters to other characters, a process that causes characters to be invisible, a process that converts, for example, photo, table, or figure into another figure (icon), and a process that converts a full screen into another screen.

Fig. 3 shows a procedure for a display illegibility control. Next, with reference to Fig. 1 to Fig. 3, the display illegibility control performed by control section 10 will be described. In the procedure shown in Fig. 3, angle detection section 11 is an angle detection sensor that detects the open angle of housings 1 and 2.

Angle detection section 11 detects the open angle of housings 1 and 2 at intervals of a predetermined period and supplies the detected value to control section 10 (at step S10).
Control section 10 compares the detected value of the open angle supplied from angle detection section 11 with a predetermined threshold (at step S11). If the detected value is equal to or greater than the threshold, control section 10 causes display section 3 to execute the first display process (a normal display process) (at step S12). If the detected value is less than the threshold, control section 10 causes display section 3 to execute the second display process (at step S13).

The foregoing control procedure is iteratively executed. This control can execute the peeping prevention process corresponding to a user's simple opening/closing operation of housings 1 and 2. If the user who is browsing secret information with the portable information terminal according to this embodiment in a train perceives that others are peeping at the information and closes housings 1 and 2 such that the open angle becomes less than the threshold, control section 10 causes display section 3 to execute the second display process that causes information to become illegible. When display section 3 executes the second display process, since information displayed on the screen becomes illegible compared to information displayed on display section 3 that executes the normal display process, the portable information terminal can prevent others from peeping.

In addition, since the user who perceives that others are peeping naturally closes housings 1 and 2, the portable information terminal uses such a natural operation to execute the peeping prevention process. Thus, when the user perceives that other are peeping, the portable information terminal can execute the peeping prevention process corresponding to his or her natural operation without causing him or her to realize that the peering prevention procedure has been executed.

The threshold of the open angle can be set to any value. The user can properly set the threshold taking into consideration the illegibility of information displayed on display section 3 when it executes the second display process.

If angle detection section 11 is an opening/closing sensor, unlike the control procedure shown in Fig. 3, control section 10 determines whether or not the open angle of housings 1 and 2 is equal to or greater than the predetermined angle based on the output signal of angle detection section 11. If the open angle is equal to or greater than the predetermined angle, control section 10 causes display section 3 to execute the first display process. If the open angle is less than the predetermined angle, control section 10 causes display section 3 to execute the second display process. In this case, this control procedure provides the same operation and effect as does the control procedure shown in Fig. 3.

Due to the fact that the larger the open angle, the more easily others can peep at display information, if the open angle is equal to or greater than the threshold (or if the open angle is equal to or greater than the predetermined angle), display section 3 may execute the second display process; if the open angle is less than the threshold (or if the open angle is less than the predetermined angle), display section 3 may execute the normal display process. In this case, the portable information terminal can execute the peeping prevention process corresponding to a user's simple opening/closing operation.

In addition, after display section 3 executes the second display process at step S 13 of the control procedure shown in Fig. 3, control section 10 may cause display section 3 to keep displaying the screen corresponding to the second display process until control section 10 detects a series of opening/closing operations based on the output signal of angle detection section 11 in which the open angle becomes equal to or greater than the threshold (or the open angle becomes equal to or greater than the predetermined angle) and then the open angle becomes less than the threshold (or the open angle becomes less than the predetermined angle). After control section 10 detects the series of the opening and closing operations, control section 10 causes display section 3 to execute the first display process.

In this procedure, when the user closes housings 1 and 2 such that the open angle becomes less than the threshold (or less than the predetermined angle), control section 10 causes display section 3 to display a screen corresponding to the second display process. Thereafter, even if the user opens housings 1 and 2 such that the open angle becomes equal to or greater than the threshold (or equal to or greater than the predetermined angle), control section 10 causes display section 3 to keep displaying the screen corresponding to the second display process. Thereafter, if the user closes housings 1 and 2 such that the open angle becomes less than the threshold (or less than the predetermined angle), control section 10 causes display section 3 to change the display process to the first display process and display the screen corresponding to the first display process.

### (Second Exemplary Embodiment)

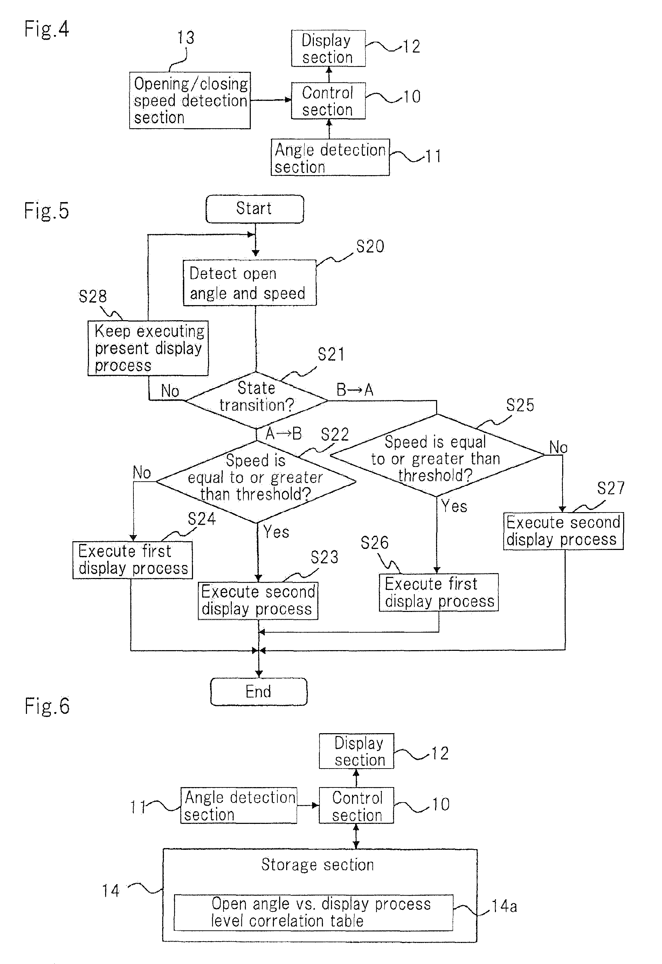

Fig. 4 is a block diagram showing a structure of a portable information terminal according to a second exemplary embodiment of the present invention.

The portable information terminal according to this embodiment is a folding type portable information terminal that includes the structure shown in Fig. 2. As shown in Fig. 4, the portable information terminal includes control section 10, angle detection section 11, display section 12, and opening/closing speed detection section 13 whose output value changes corresponding to a user's opening/closing operation. Angle detection section 11 and display section 12 are the same as those according to the first embodiment.

Opening/closing speed detection section 13 detects the opening/closing speed of housings 1 and 2. For example, opening/closing speed detection section 13 is composed of an acceleration sensor that is mounted on any one of housings 1 and 2. The acceleration sensor detects the acceleration in the opening/closing direction of housings 1 and 2 (for example, in the direction along a straight line that connects a position of a point on a plane on a housing in the state that it is fully closed and a position of the point on the housing in the state in which it is fully open).

According to this embodiment, control section 10 determines whether or not a state transition from state A in which the open angle of housings 1 and 2 is equal to or greater than the threshold (or equal to or greater than the predetermined angle) to state B in which the open angle is less than the threshold (or less than the predetermined angle) takes place or a state transition from state B to state A takes place. If a state transition from state A to state B or a state transition from state B to state A takes place, control section 10 compares the output value (opening/closing speed) of opening/closing speed detection section 13 upon the state transition with the threshold and causes display section 3 to perform the display illegibility control (change the display process between the first display process and the second display process) corresponding to the compared result.

Fig. 5 shows a procedure for performing display illegibility control. Next, with reference to Fig. 4 and Fig. 5, the display illegibility control performed by control section 10 will be described. In the procedure shown in Fig. 5, angle detection section 11 is an angle detection sensor.

Angle detection section 11 detects the open angle of housings 1 and 2 at intervals of a predetermined period and opening/closing speed detection section 13 detects the opening/closing speed as housings 1 and 2 are opened and closed (at step S20). Control section 10 determines whether a state transition from state A to state B or a state transition from state B to state A takes place based on the detected value (time sequential data) of the open angle supplied from angle detection section 11 (at step S21).

If a state transition from state A to state B takes place, control section 10 obtains the opening/closing speed during the state transition based on the average value of the accelerations detected by opening/closing speed detection section 13 during the state transition and determines whether or not the obtained opening/closing speed is equal to or greater than the threshold (at step S22). If the opening/closing speed is equal to or greater than the threshold, control section 10 causes display section 3 to execute the second display process (at step S23). If the opening/closing speed is less than the threshold, control section 10 causes display section 3 to execute the first display process (a normal display process) (at step S24).

If a state transition from state B to state A takes place, control section 10 obtains the opening/closing speed during the state transition from the average value of the accelerations detected by opening/closing speed detection section 13 during the state transition and determines whether or not the obtained opening/closing speed is equal to or greater than the threshold (at step S25). If the opening/closing speed is equal to or greater than the threshold, control section 10 causes display section 3 to execute the first display process (at step S26). If the opening/closing speed is less than the threshold, control section 10 causes display section 3 to execute the second display process (at step S27).

If control section 10 does not detect any transition at step S21, it causes display section 3 to keep executing the present display process (at step S28).

The foregoing control procedure is iteratively executed. At the second or later iteration, control section 10 causes display section 3 to keep executing the first display process at step S24 and to keep executing the second display process at step S27.

The information terminal according to this embodiment can also execute the peeping prevention process corresponding to a user's simple opening/closing operation. However, to execute the second display process, it is necessary to satisfy conditions in which a state transition from state A to state B takes place and in which the opening/closing speed is equal to or greater than the threshold.

For example, if the user who is browsing secret information with the portable information terminal perceives that others are peeping and then closes housings 1 and 2 at an opening/closing speed that is equal to or greater than the threshold such that the open angle becomes less than the threshold, control section 10 causes display section 3 to execute the second display process that causes display information to become illegible. When display section 3 executes the second display process, since the display information becomes illegible compared to that displayed in the normal state, the portable information terminal can prevent others from peeping.

After display section 3 executes the second display process at step S23, display section 3 keeps executing the second display process unless the user closes housings 1 and 2 at an opening/closing speed that is equal to or greater than the threshold such that the open angle becomes equal to or greater than the threshold. In other words, after step S23, display section 3 keeps executing the second display process regardless of any open angle unless the user opens or closes housings 1 and 2 at an opening/closing speed that is equal to or greater than the threshold.

When the user opens and closes housings 1 and 2 of the portable information terminal according to this embodiment, the accelerations in the opening and closing directions of housings 1 and 2 are sometimes the same. Thus, from a viewpoint of cost reduction, opening/closing speed detection section 13 according to this embodiment is composed of one acceleration sensor mounted on any one of housings 1 and 2.

Alternatively, opening/closing speed detection section 13 may be composed of two acceleration sensors respectively mounted on housings 1 and 2. In this case, control section 10 obtains the average value of the accelerations detected by one acceleration sensor and the accelerations detected by the other acceleration sensor and determines whether or not the average value exceeds the threshold. The determination accuracy of the opening/closing speed in the case in which two acceleration sensors are used is greater than that in the case in which one acceleration sensor is used.

Alternatively, branch "A → B" and branch "B → A" at step S21 of the control procedure shown in Fig. 5 may be replaced with branch "B → A" and branch "A → B," respectively. In this case, to execute the second display process, it is necessary to satisfy conditions in which a state transition from state B to state A takes place and in which the opening/closing speed during the state transition is equal to or greater than the threshold.

Further alternatively, determination "speed is equal to or greater than the threshold?" at steps S22 and S25 of the control procedure shown in Fig. 5 may be replaced with determination "speed is less than the threshold?" In this case, to execute the second display process, it is necessary to satisfy conditions in which the transition from state A to state B takes place and in which the opening/closing speed upon the state transition is less than the threshold.

If determination "speed is equal to or greater than the threshold?" is replaced with determination "speed is less than the threshold?", branch "A → B" and branch "B → A" at step S21 at step S21 may be replaced with branch "B → A" and branch "A → B." In this case, to execute the second display process, it is necessary to satisfy conditions in which the state transition from state B to state A takes place and in which the opening/closing speed upon the state transition is less than the threshold.

### (Third Exemplary Embodiment)

Fig. 6 is a block diagram showing a structure of a portable information terminal according to a third exemplary embodiment of the present invention.

The portable information terminal according to this embodiment is a folding type portable information terminal that includes the structure shown in Fig. 2. As shown in Fig. 6, the portable information terminal includes control section 10, angle detection section 11, display section 12, and storage section 14. Angle detection section 11 and display section 12 according to this embodiment are the same as those according to the first embodiment.

Storage section 14 is a storage device such as a hard disk or a semiconductor memory. Storage section 14 has stored open angle vs. display process level correlation table 14a that correlates open angles and display processes corresponding to illegibility levels.

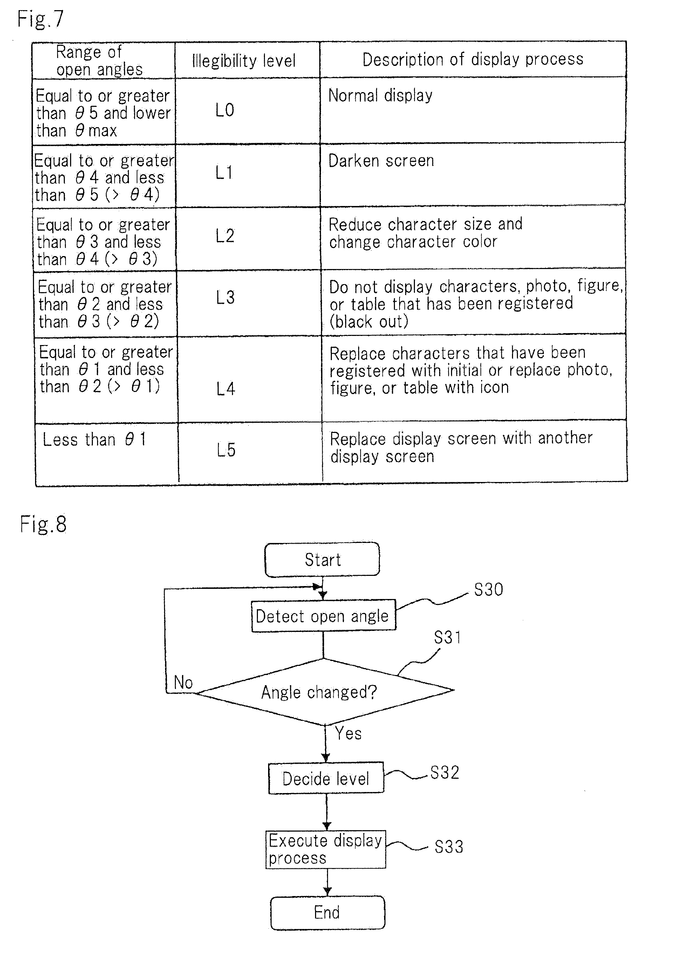

Fig. 7 shows an example of open angle vs. display process level correlation table 14a. Open angle vs. display process level correlation table 14a correlates five illegibility levels L0 to L5 and ranges of open angles. The illegibility levels indicate how information displayed on display section 3 is illegible in such a manner that L0 is the lowest illegible level (normal display) and L5 represents the highest illegible level.

Control section 10 refers to open angle vs. display process level correlation table 14a and performs the display illegibility control based on an illegibility level corresponding to the open angle detected by angle detection section 11.

Fig. 8 shows a procedure for performing display illegibility control. Next, with reference to Fig. 6 to Fig. 8, the display illegibility control performed by control section 10 will be described. In the procedure shown in Fig. 8, angle detection section 11 is an angle detection sensor.

Angle detection section 11 detects the open angle of housings 1 and 2 (at step S30). If the open angle detected at the present time is different from the open angle detected at the last time, control section 10 determines that the open angle has changed (at step S31). If the open angle has changed, control section 10 refers to open angle vs. display process level correlation table 14a and decides an illegibility level corresponding to the open angle (changed open angle) detected by angle detection section 11 (at step S32). Thereafter, control section 10 causes display section 3 to execute a display process corresponding to the decided illegibility level (at step S33).

Specifically, if the open angle is less than θ1, display section 3 executes a display process corresponding to level L5 (a process that replaces display information with other display information). If the open angle is equal to or greater than θ1 and less than 82 (> θ1), display section 3 executes a display process corresponding to level L4 (a process that replaces characters that have been registered with an initial or replaces photo, figure, or table that has been registered with an icon).

If the open angle is equal to or greater than θ2 and less than 83 (> θ2), display section 3 executes a display process corresponding to level L3 (a process that blacks out characters, photo, figure, or table that has been registered). If the open angle is equal to or greater than θ3 and less than θ4 (> θ3), display section 3 executes a display process corresponding to level L2 (a process that reduces the character size and changes the character color).

If the open angle is equal to or greater than 84 and less than θ5 (> θ4), display section 3 executes a display process corresponding to level L1 (a process that darkens the screen). If the open angle is equal to or greater than 85 or less than θmax (> θ5), display section 3 executes a process corresponding to level L0 (a normal display process). θmax is the angle at which housings 1 and 2 are fully open.

Characters, photos, figures, tables, and so forth that have been registered are stored in storage section 14. When control section 10 causes display section 3 to execute display processes corresponding to level L3 and level L4, control section 10 determines whether or not information displayed on display section 3 contains registered information. If the information displayed on display section 3 contains registered information, control section 10 causes display section 3 to perform a process corresponding to the decided illegibility level for the registered information.

The portable information terminal according to this embodiment can perform the peeping prevention process corresponding to a user's simple opening/closing operation and change the display illegibility level corresponding to the open angle.

For example, by setting the open angle of housings 1 and 2 to less than θ1, since information displayed on display section 3 is replaced with other information (that is not secret to other persons), the user can fully prevent others from peeping. In this case, however, not only other persons, but also the user himself or herself has to see the other information.

If the user wants to watch secret information, but to prevent others from peeping, he or she needs to set the open angle of housings 1 and 2 to equal to or greater than θ3 and less than θ5. In this case, however, display section 3 executes a process that reduces the character size and changes the character color or lowers the luminance of the screen.

Thus, by performing the opening/closing operation in such a manner, the user can easily change the display illegibility level.

θ1 to θ5 can be appropriately set in the range of open angles of housings 1 and 2. In addition, levels L0 to L5 and the corresponding display processes can be appropriately set in the range of open angles of housings 1 and 2.

The open angle vs. display process level correlation table 14a shown in Fig. 7 correlates open angles and illegibility levels such that the smaller the open angle, the higher the illegibility level becomes. Alternatively, open angle vs. display process level correlation table 14a may correlate them such that the larger the open angle, the higher the illegibility level becomes.

### (Fourth Exemplary Embodiment)

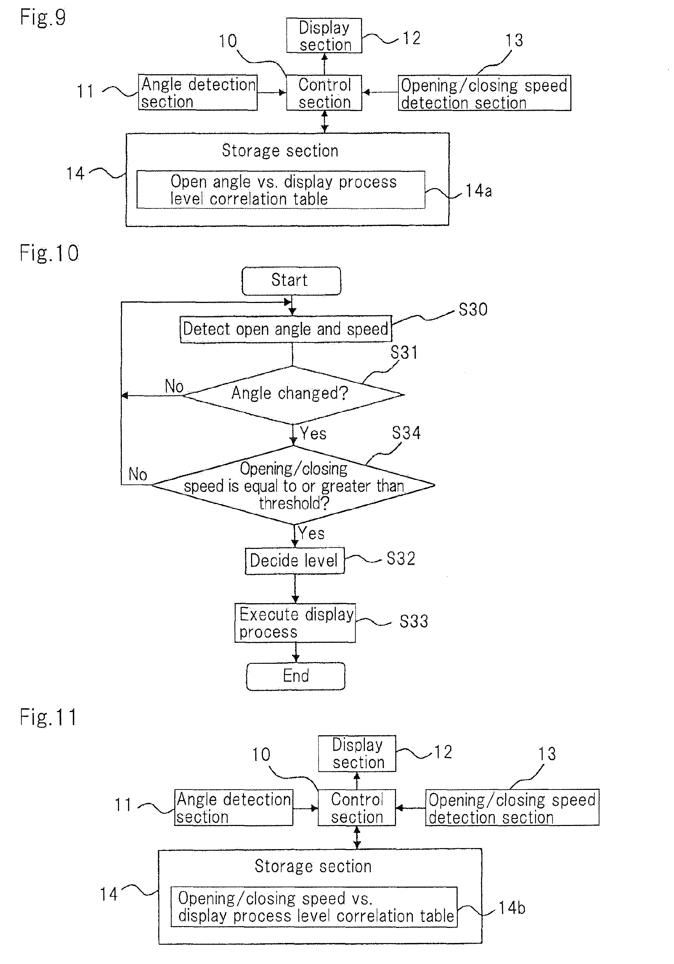

Fig. 9 is a block diagram showing a structure of a portable information terminal according to a fourth exemplary embodiment of the present invention.

The portable information terminal according to this embodiment is a folding type portable information terminal that includes the structure shown in Fig. 2. As shown in Fig. 9, the portable information terminal includes control section 10, angle detection section 11, display section 12, opening/closing speed detection section 13, and storage section 14. The portable information terminal according to this embodiment has the same structure as that according to the third embodiment except for part of the procedure that changes the display illegibility level performed by control section 10.

Fig. 10 shows an example of a procedure that changes the display illegibility level of the portable information terminal according to this embodiment. Steps S31 to S33 of the control procedure shown in Fig. 10 are the same as those of the control procedure shown in Fig. 8. In the portable information terminal according to this embodiment, at step S30, an open angle and an opening/closing speed are detected. In addition, after it is determined that the angle has been changed at step S31, the opening/closing speed is detected and it is determined whether or not the detected opening/closing speed is equal to or greater than a predetermined threshold (at step S34). Only if the detected opening/closing speed is equal to or greater than the threshold, step S32 is executed.

In the foregoing control procedure, only if the user changes the open angle at an opening/closing speed that is equal to or greater than the threshold (or less than the threshold), can he or she change the display illegibility level. Otherwise, even if the user changes the open angle, display section 3 keeps executing the present display process.

Alternatively, step S34 shown in Fig. 10 can be replaced with a step at which it is determined whether or not the detected opening/closing speed is equal to or lower than the threshold. In this case, only if the user changes an open angle at an opening/closing speed that is equal to or lower than the threshold, can he or she change the display illegibility level. Otherwise, even if the user changes the open angle, display section 3 keeps executing the present display process.

### (Fifth Exemplary Embodiment)

Fig. 11 is a block diagram showing a structure of a portable information terminal according to a fifth exemplary embodiment of the present invention.

The portable information terminal according to this embodiment is a folding type portable information terminal that includes the structure shown in Fig. 2. As shown in Fig. 11, the portable information terminal includes control section 10, angle detection section 11, display section 12, opening/closing speed detection section 13, and storage section 14. Angle detection section 11, display section 12, and opening/closing speed detection section 13 according to this embodiment are the same as those according to the second embodiment. Storage section 14 is a storage device such as a hard disk or a semiconductor memory. Storage section 14 has stored opening/closing speed vs. display process level correlation table 14b that correlates opening/closing speeds and display processes corresponding to illegibility levels.

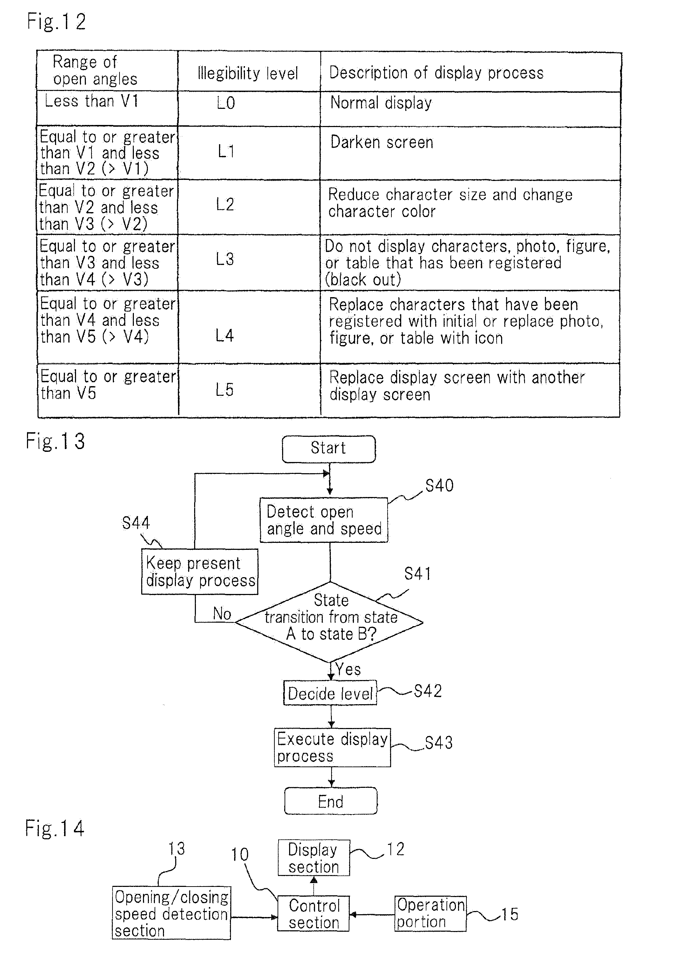

Fig. 12 shows an example of opening/closing speed vs. display process level correlation table 14b. Opening/closing speed vs. display process level correlation table 14b correlates five illegibility levels L0 to L5 and ranges of opening/closing speeds. The illegibility levels indicate how information displayed on display section 3 is illegible in such a manner that L0 represents the lowest illegibility level (normal display) and L5 represents the highest illegibility level. The relationship between the individual levels and processes is the same as that according to the third embodiment.

Control section 10 determines whether or not a state transition from state A in which the open angle of housings 1 and 2 is equal to or greater than the threshold (or equal to or greater than the predetermined angle) to state B in which the open angle is less than the threshold (or less than the predetermined angle) takes place based on the output signal of angle detection section 11. If a state transition from state A to state B takes place, control section 10 compares the output value (opening/closing speed) of opening/closing speed detection section 13 when the state transitions from A to B with the threshold and performs the display illegibility control for display section 3 corresponding to the compared result.

Fig. 13 shows a procedure for performing display illegibility control. Next, with reference to Fig. 11 to Fig. 13, the display illegibility control performed by control section 10 will be described. In the procedure shown in Fig. 13, angle detection section 11 is an angle detection sensor.

Angle detection section 11 detects the open angle of housings 1 and 2 at intervals of a predetermined period and opening/closing speed detection section 13 detects the opening/closing speed as the user opens or closes housings 1 and 2 (at step S40). Control section 10 determines whether or not a state transition from state A to state B takes place based on the detected value (time sequential data) of the open angle supplied from angle detection section 11 (at step S41).

If a state transition from state A to state B takes place, control section 10 obtains the opening/closing speed when the state transitions from A to B based on the average value of accelerations detected by opening/closing speed detection section 13 during the state transition, refers to opening/closing speed vs. display process level correlation table 14b, and then decides an illegibility level corresponding to the obtained opening/closing speed (at step S42). Thereafter, control section 10 causes display section 3 to execute a display process corresponding to the decided illegibility level (at step S43).

Specifically, if the opening/closing speed is less than V1, display section 3 executes a process corresponding to level L0 (a normal display process). If the opening/closing speed is equal to or greater than V1 and less than V2 (> V1), display section 3 executes a display process corresponding to level L1 (a process that darkens the screen).

If the opening/closing speed is equal to or greater than V2 and less than V3 (> V2), display section 3 executes a display process corresponding to level L2 (a process that reduces the character size and changes the character color). If the opening/closing speed is equal to or greater than V3 and less than V4 (> V3), display section 3 executes a display process corresponding to level L3 (a process that blacks out characters, photo, figure, or table that has been registered).

If the opening/closing speed is equal to or greater than V4 and less than V5 (> V4), display section 3 executes a display process corresponding to level L4 (a process that replaces characters that have been registered with an initial or replaces photo, figure, or table that has been registered with an icon). If the opening/closing speed is equal to or greater than V5, display section 3 executes a display process corresponding to level L5 (a process that replaces display information with another display information).

After control section 10 has detected a state transition from state A to state B and has changed the display process, control section 10 causes display section 3 to keep executing the present display process until control section 10 detects a state transition from state A to state B again (at step S44).

The portable information terminal according to this embodiment can perform the peeping prevention process corresponding to a user's simple opening/closing operation and change the display illegibility level corresponding to an opening/closing speed.

For example, by changing the open angle of housings 1 and 2 at an opening/closing speed that is equal to or greater than V, since a state transition from state A to state B takes place, information displayed on display section 3 is replaced with other information (that is not secret to other persons). Thus, the user can fully prevent others from peeping. In this case, however, not only other persons, but also the user himself or herself has to see the other information.

If the user wants to watch secret information, but to prevent others from peeping, he or she needs to open and close housings 1 and 2 at opening/closing speeds that are equal to or greater than V1 and less than V3 such that a state transition from state A to state B takes place. In this case, display section 3 executes a process that reduces the character size and changes the character color or lowers the luminance of the screen.

Thus, by opening and closing housings 1 and 2 in such a manner, the user can easily change the display illegibility level.

Opening/closing speeds V1 to V5 can be appropriately set in the range of open angles of housings 1 and 2 and in the range of opening/closing speeds at which the user can open and close housings 1 and 2. In addition, levels L0 to L5 and the corresponding display processes can be appropriately set in the range of opening/closing speeds.

The opening/closing speed vs. display process level correlation table 14b shown in Fig. 12 correlates opening/closing speeds and illegibility levels such that the faster the opening/closing speed, the higher the illegibility level becomes. Alternatively, opening/closing speed vs. display process level correlation table 14b may correlate them such that the slower the opening/closing speed, the higher the illegibility level becomes.

If control section 10 detects a state transition from state A to state B at step S41 of the control procedure shown in Fig. 13, control section 10 refers to opening/closing speed vs. display process level correlation table 14b and decides an illegibility level corresponding to the opening/closing speed. Alternatively, control section 10 may perform the following process.

If control section 10 detects a state transition from state A to state B, control section 10 controls display section 12 corresponding to a predetermined level (for example, L1) of levels L0 to L5 on opening/closing speed vs. display process level correlation table 14b. Thereafter, whenever control section 10 detects a state transition from state A to state B, control section 10 refers to opening/closing speed vs. display process level correlation table 14b and gradually raises or lowers the illegibility level of the display process to be executed. After control section 10 has raised the illegibility level to level L5, if control section 10 detects a state transition from state A to state B at step S41, control section 10 changes the illegibility level from L5 to L0. In contrast, after control section 10 has lowered the illegibility level to L0, if control section 10 detects a state transition from state A to state B, control section 10 changes the illegibility level from L0 to L5.

In the foregoing case, opening/closing speed vs. display process level correlation table 14b may be a table in which a plurality of levels that cause information to become illegible at each different level are set and contents of each display process are provided at each level.

Alternatively, whenever control section 10 detects a state transition from state A to state B, control section 10 may gradually raise or lower the illegibility level corresponding to an opening/closing speed detected by opening/closing speed detection section 13 when the state transitions from A to B.

### (Sixth Exemplary Embodiment)

Fig. 14 is a block diagram showing a structure of a portable information terminal according to a sixth exemplary embodiment of the present invention.

The portable information terminal according to this embodiment is a folding type portable information terminal that includes the structure shown in Fig. 2. As shown in Fig. 14, the portable information terminal includes control section 10, display section 12, opening/closing speed detection section 13, and operation portion 15.

Operation portion 15 includes a hard key such as an operation button mounted on any one of housings 1 and 2. While the hard key is being pressed, operation portion 15 outputs an indication signal that indicates that housings 1 and 2 are being opened and closed to control section 10. The hard key may be mounted at any position as long as the user can press it when he or she performs the opening/closing operation. However, from the viewpoint of operability, it is preferred that the hard key be mounted at a position where he or she holds the terminal.

While operation portion 15 is being pressed (the indication signal is being received), control section 10 supplies an opening/closing speed detection indication signal to opening/closing speed detection section 13. Unless operation portion 15 is being pressed, control section 10 does not supply the opening/closing speed detection indication signal to opening/closing speed detection section 13.

Opening/closing speed detection section 13 is composed of one acceleration sensor mounted on any one of housings 1 and 2. While the opening/closing speed detection indication signal is being supplied, an output signal of the acceleration sensor is supplied to control section 10.

Control section 10 determines that the period in which operation portion 15 is being pressed is a period in which the opening/closing operation is being performed and assumes that the speed detected by opening/closing speed detection section 13 is the opening/closing speed. While operation portion 15 is being pressed, control section 10 obtains the average value of speeds detected by opening/closing speed detection section 13 and performs the display illegibility control for display section 3 corresponding to the average value of the speeds.

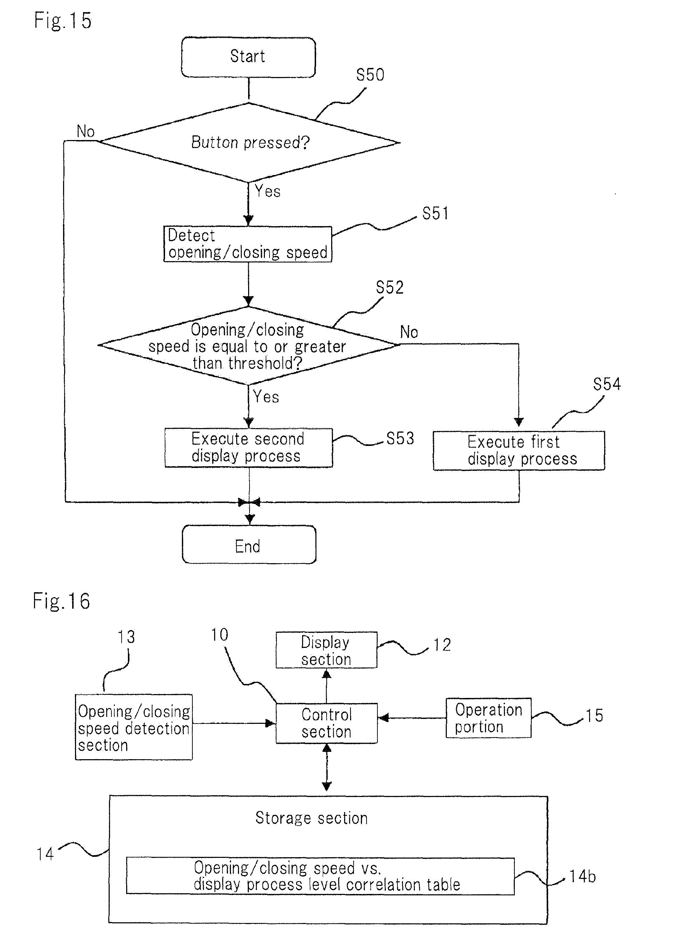

Fig. 15 shows a procedure for performing display illegibility control. Next, with reference to Fig. 14 and Fig. 15, the display illegibility control performed by control section 10 will be described.

Control section 10 determines whether or not operation portion 15 is being pressed (at step S50). If operation portion 15 is being pressed, control section 10 causes opening/closing speed detection section 13 to detect the opening/closing speeds and obtains the average value of the opening/closing speeds (at step S51).

Thereafter, control section 10 determines whether or not the average value of the opening/closing speeds obtained at step S51 is equal to or greater than the threshold (at step S52). If the average value of the opening/closing speeds is equal to or greater than the threshold, control section 10 causes display section 3 to execute the second display process (at step S53). If the average value of the opening/closing speeds is less than the threshold, control section 10 causes display section 3 to execute the first display process (at step S54). The first and second display processes according to this embodiment are the same as those according to the first embodiment.

To execute the second display process according to the foregoing display control, the user presses operation portion 15 and then opens and closes housings 1 and 2 at opening/closing speeds whose average value is equal to or greater than the threshold. When the second display process is executed, since display information becomes illegible compared to display information displayed in the normal display process, the portable information terminal can prevent others from peeping at the display information. To execute the first display process, the user presses operation portion 15 and then opens and closes housings 1 and 2 at opening/closing speeds whose average value is less than the threshold.

The procedure shown in Fig. 15 may be performed in such a manner that if the average value of the opening/closing speeds is equal to or greater than the threshold, the first display process is executed; if the average value of the opening/closing speeds is less than the threshold, the second display process is executed. In this case, to execute the second display process, the user presses operation portion 15 and opens and closes housings 1 and 2 at opening/closing speeds whose average speed is less than the threshold. To execute the first display process, the user presses operation portion 15 and opens and closes housings 1 and 2 at opening/closing speeds whose average speed is equal to or greater than the threshold.

Alternatively, operation portion 15 may be omitted from the portable information terminal according to this embodiment. In this case, control section 10 monitors output values of opening/closing speed detection section 13. If the average value of output values in a predetermined period is equal to or greater than the threshold, the second display process will be executed. If the average value of the output values in the predetermined period is less than the threshold, the first display process will be executed.

In the foregoing case, if the average value of output values in the predetermined period is less than the threshold, control section 10 may cause display section 3 to execute the second display process. If the average value of output values in the predetermined period is equal to or larger than the threshold, control section 10 may cause display section 3 to execute the first display process.

### (Seventh Exemplary Embodiment)

Fig. 16 is a block diagram showing a structure of a portable information terminal according to a seventh exemplary embodiment of the present invention.

The portable information terminal according to this embodiment is a folding type portable information terminal that includes the structure shown in Fig. 2. As shown in Fig. 16, the portable information terminal includes control section 10, display section 12, opening/closing speed detection section 13, storage section 14, and operation portion 15.

Storage section 14 is the same as that according to the fifth embodiment. Storage section 14 has stored opening/closing speed vs. display process level correlation table 14b that correlates opening/closing speeds and display processes corresponding to illegibility levels.

Opening/closing speed detection section 13 and operation portion 15 according to this embodiment are the same as those according to the sixth embodiment. While operation portion 15 is being pressed, control section 10 supplies an opening/closing speed detection indication signal to opening/closing speed detection section 13. Otherwise, control section 10 does not supply the opening/closing speed detection indication signal to opening/closing speed detection section 13.

While operation portion 15 is being pressed, control section 10 obtains the average value of opening/closing speeds detected by opening/closing speed detection section 13 and performs the display illegibility control for display section 3 corresponding to the average value of the opening/closing speeds.

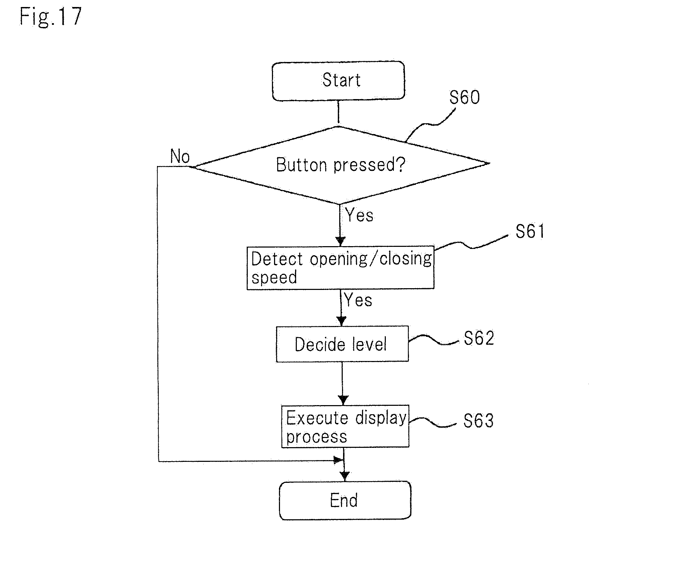

Fig. 17 shows a procedure for performing display illegibility control. Next, with reference to Fig. 16 and Fig. 17, the display illegibility control performed by control section 10 will be described.

Control section 10 determines whether or not operation portion 15 is being pressed (at step S60). While operation portion 15 is being pressed, control section 10 causes opening/closing speed detection section 13 to detect the opening/closing speeds and obtains the average value of the opening/closing speeds (at step S61).

Thereafter, control section 10 refers to opening/closing speed vs. display process level correlation table 14b and decides an illegibility level corresponding to the average value of opening/closing speeds obtained at step S61 (at step S62). Thereafter, control section 10 causes display section 3 to execute a display process corresponding to the decided illegibility level (at step S63).

Like the fifth embodiment, the portable information terminal according to the seventh embodiment can change the display illegibility level corresponding to an opening/closing speed.

For example, by pressing operation portion 15 and opening and closing housings 1 and 2 such that the average value of opening/closing speeds becomes equal to or greater than V5, since information displayed on display section 3 is replaced with other information (that is not secret to other persons), the user can fully prevent others from peeping. In this case, however, not only other persons, but also the user himself or herself has to see the other information.

If the user wants to watch secret information, but to prevent others from peeping, he or she needs to press operation portion 15 and open and close housings 1 and 2 such that the average value of opening/closing speeds becomes equal to or greater than V1 and less than V3. In this case, display section 3 executes a process that reduces the character size and changes the character color or lowers the luminance of the screen.

Thus, by opening and closing housings 1 and 2 in such a manner, the user can easily change the display illegibility level.

Opening/closing speeds V1 to V5 can be appropriately set in the range of open angles of housings 1 and 2 and in the range of opening/closing speeds at which the user can open and close housings 1 and 2. In addition, levels L0 to L5 and the corresponding display processes can be appropriately set in the range of opening/closing speeds.

The opening/closing speed vs. display process level correlation table 14b correlates the opening/closing speeds and illegibility levels such that the faster the opening/closing speed, the higher the illegibility level becomes. Alternatively, opening/closing speed vs. display process level correlation table 14b may correlate them such that the slower the opening/closing speed, the higher the illegibility level becomes.

According to the control procedure shown in Fig. 17, control section 10 refers to opening/closing speed vs. display process level correlation table 14b and decides the illegibility level corresponding to an opening/closing speed. Alternatively, whenever operation portion 15 is pressed, control section 10 may determine whether or not the average value of opening/closing speeds is equal to or greater than the threshold (or lower than the threshold). If the average value of opening/closing speeds is equal to or greater than the threshold (or lower than the threshold), control section 10 may raise or lower the display illegibility level by one level.

However, in the case that control section 10 raises the display illegibility level one by one, after control section 10 raises the display illegibility level to level L5, if operation portion 15 is pressed, control section 10 determines that the average value of opening/closing speeds is equal to or greater than the threshold (or lower than the threshold), control section 10 changes the illegibility level from L5 to L0.

In the case that control section 10 lowers the display illegibility level one by one, after control section 10 lowers the display illegibility level to level L0, if operation portion 15 is pressed, control section 10 determines that the average value of opening/closing speeds is equal to or greater than the threshold. In this case, control section 10 changes the display illegibility level from L0 to L5.

### (Other Exemplary Embodiments)

A portable information terminal according to another exemplary embodiment includes:
a first housing including a display section; a second housing which is connected to the first housing, an open angle that is an angle formed by the second housing and a plane of the display section being changeable; detection means whose output value changes according to an operation in which the first housing and the second housing are opened or closed; and a control section that causes the display section to execute a first display process if the output value of the detection means is equal to or greater than a threshold and to execute a second display process if the output value is less than the threshold. The first display process or the second display process includes a process that causes information displayed on the display section to become illegible compared to information displayed on the display section that executes the other display process.

In the foregoing structure, the detection means is angle detection section 11 or opening/closing speed detection section 13 described in the foregoing embodiments.

If the detection means is angle detection section 11, an open angle of the first and second housings is detected. If the detected value of the open angle is equal to or greater than the threshold, the display section is caused to execute the first display process. If the detected value of the open angle is less than the threshold, the display section is caused to execute the second display process. If the detection means is opening/closing speed detection section 13, an opening/closing speed of the first and second housings is detected. If the detected value of the opening/closing speed is equal to or greater than the threshold, the display section is caused to execute the first display process. If the detected value of the opening/closing speed is less than the threshold, the display section is caused to execute the second display process. In any case, the first or second display process includes a process that causes information displayed on the display section to become illegible compared to the information displayed on the display section that executes the other display process.

The structure in which the detection means is opening/closing speed detection section 13 may also have a table that correlates a plurality of ranges of opening/closing speeds of the first housing and the second housing and display processes that cause information to become illegible in different levels. In this case, the control section obtains a display process corresponding to the average value of opening/closing speeds detected by the opening/closing speed detection section 13 from the table and causes display section 13 to execute the obtained display process.

The display processes may be set in the table such that the faster the opening/closing speed, the higher the illegibility level becomes or the slower the opening/closing speed, the lower the illegibility level becomes.

After the control section has changed the display process, the control section causes the display section to keep executing the display process until the key is pressed.
The foregoing portable information terminals according to the foregoing embodiments are just examples. Without departing from the spirit of the present invention, their structure may be appropriately changed.

For example, each of housings 1 and 2 may be provided with a display section. In this case, control section 10 performs the foregoing display illegibility control for each display screen.

If the portable information terminal includes a structure in which each of housings 1 and 2 is provided with the display section, control section 10 may cause one display section to perform the foregoing display illegibility control, and may cause the other display section to flash a warning to the peeper or to distract the peeper.

Alternatively, control section 10 may perform a control that causes information displayed on one display section to be illegible compared to information displayed on the other display section.

In the portable information terminals according to the foregoing embodiments, the control section detects changes of open angles and opening/closing speeds as housings 1 and 2 are opened and closed. Alternatively, the control section may detect a change of posture of at least one of housings 1 and 2 (including shaking operations and forward and backward tilting operations of housings as well as their opening and closing operations) and change the display process corresponding to the detected operation.

Specifically, according to the sixth and seventh embodiments, posture change detection means is provided instead of opening/closing speed detection section 13. The posture change detection means is composed of an acceleration sensor mounted on at least one of housings 1 and 2. The direction of acceleration detected by the acceleration sensor is properly set as the posture at which changes are to be detected (for example, shaking operations or forward and backward tilting operations for housings). In this case, like the sixth and seventh embodiments, control section 10 performs the same display process changing control based on the compared result of the output value of the acceleration sensor and the threshold.

In the foregoing case, by performing a simple operation such as pressing the operation portion, shaking or tilting housings 1 and 2, display section 3 can execute the second display process that causes information displayed to be illegible.

With reference to the embodiments, the present invention has been described. However, it should be understood by those skilled in the art that the structure and details of the present invention may be changed in various manners without departing from the scope of the present invention.

The present application claims a priority based on Japanese Patent Application JP 2010-002066 filed on January 7, 2010, the entire contents of which being incorporated herein by reference in its entirety.

## Claims

1. A portable information terminal, comprising:
a first housing including a display section;
a second housing which is connected to said first housing, an open angle that is an angle formed by the second housing and a plane of said display section being changeable;
detection means whose output value changes according to an operation in which said first housing and said second housing are opened or closed; and
a control section that causes said display section to execute a first display process if the output value of said detection means is equal to or greater than a threshold and to execute a second display process if the output value is less than the threshold,
wherein said first display process or said second display process includes a process that causes information displayed on said display section to become illegible compared to information displayed on the display section that executes the other display process.

2. The portable information terminal as set forth in claim 1,
wherein said detection means is open angle detection means that detects the open angle of said first housing and said second housing.

3. The portable information terminal as set forth in claim 2, further comprising:
a table in which a range of open angles of said first housing and said second housing is divided into a plurality of angle ranges and in which contents of each display process are provided at each angle within the range, each display process causing information to become illegible at each different level,
wherein said control section refers to said table, decides a display process corresponding to an open angle detected by said open angle detection means, and controls said display section based on the decided display process.

4. The portable information terminal as set forth in claim 3, further comprising:
opening/closing speed detection means that detects an opening/closing speed of said first housing and said second housing,
wherein if said control section detects that the open angle of said first housing and said second housing changes based on the output value of said open angle detection means, said control section obtains an opening/closing speed while said open angle is changing based on the output value of said opening/closing speed detection means, refers to said table, and decides a display process corresponding to the changed open angle if the obtained value of the opening/closing speed is equal to or greater than a second threshold or less than the second threshold.

5. The portable information terminal as set forth in claim 3 or 4,
wherein the contents of each display process are provided to said table such that the smaller the open angle, the higher the illegibility level becomes.

6. The portable information terminal as set forth in claim 3 or 4,
wherein the contents of each display process are provided to said table such that the larger the open angle, the higher the illegibility level becomes.

7. The portable information terminal as set forth in claim 2, further comprising:
opening/closing speed detection means that detects an opening/closing speed of said first housing and said second housing,
wherein if said control section detects, based on the output value of said open angle detection means, a first state transition from a first state to a second state, in which the open angle of said first housing and said second housing is different from that of the first state, or detects, based on the output value of said open angle detection means, a second state transition from the second state to the first state, said control section obtains an opening/closing speed during said state transition based on the output value of said opening/closing speed detection means, compares the obtained opening/closing speed with a second threshold, and causes said display section to change the display process between said first display process and said second display process corresponding to the compared result.

8. The portable information terminal as set forth in claim 7,
wherein after said control section has detected said first state transition and has changed the display process between said first display process and said second display process, said control section causes said display section to keep executing the changed display process until said control section detects said second state transition.

9. The portable information terminal as set forth in claim 7,
wherein after said control section has detected said second state transition and has changed the display process between said first display process and said second display process, said control section causes said display section to keep executing the changed display process until said control section detects said first state transition.

10. The portable information terminal as set forth in claim 1, further comprising:
open angle detection means that detects an open angle of said first housing and said second housing; and
a table in which a range of opening/closing speeds of said first housing and said second housing is divided into a plurality of speed ranges and in which contents of each display process are provided at each speed within the range, each display process causing information to become illegible at each different level,
wherein said detection means is opening/closing speed detection means that detects an opening/closing speed of said first housing and said second housing, and
wherein if said control section detects, based on the output value of said open angle detection means, a state transition from a first state to a second state, in which the open angle of said first housing and said second housing is different from that of the first state, said control section obtains an opening/closing speed upon said state transition based on an output value of said opening/closing speed detection means, obtains a display process corresponding to the obtained opening/closing speed from said table, and controls said display section based on the obtained display process.

11. The portable information terminal as set forth in claim 10,
wherein after said control section has detected said state transition and has changed the display process, said control section causes said display section to keep executing the changed display process until said control section detects said state transition.

12. The portable information terminal as set forth in claim 10 or 11,
wherein the contents of each display process are provided to said table such that the faster the opening/closing speed, the higher the illegibility level becomes.

13. The portable information terminal as set forth in claim 10 or 11,
wherein the contents of each display process are provided to said table such that the slower the opening/closing speed, the higher the illegibility level becomes.

14. The portable information terminal as set forth in claim 1,
wherein said detection means is opening/closing speed detection means that detects an opening/closing speed of said first housing and said second housing.

15. The portable information terminal as set forth in claim 14, further comprising:
an operation portion that includes a key and that outputs an indication signal that indicates that said first housing and said second housing are being opened or closed while the key is being pressed,
wherein said control section causes said opening/closing speed detection means to detect opening/closing speeds of said first housing and said second housing while said indication signal is being supplied from said operation portion, compares an average value of the detected opening/closing speeds with said threshold and changes the display process between said first display process and said second display process corresponding to the compared result.

16. The portable information terminal as set forth in claim 15, further comprising:
a table in which a range of opening/closing speeds of said first housing and said second housing is divided into a plurality of speed ranges and in which contents of each display process are provided at each speed within the range, each display process causing information to become illegible at each different level,
wherein said control section obtains a display process corresponding to an average value of opening/closing speeds detected by said opening/closing speed detection means from said table and controls said display section based on the obtained display process.

17. The portable information terminal as set forth in claim 16,
wherein the contents of each display process are provided to said table such that the faster the opening/closing speed, the higher the illegibility level becomes.

18. The portable information terminal as set forth in claim 16,
wherein the contents of each display process are provided to said table such that the slower the opening/closing speed, the higher the illegibility level becomes.

19. The portable information terminal as set forth in any one of claims 15 to 18,
wherein after said control section has changed the display process, said control section causes said display section to keep executing the changed display process until said key is pressed again.

20. The portable information terminal as set forth in claim 1, further comprising:
a table in which a plurality of levels that cause information to become illegible at each different level are set and contents of each display process are provided at every level,
wherein if said control section detects a state transition from a first state, in which the output value of said detection means is equal to or greater than said threshold, to a second state in which the output value of said detection means is less than said threshold, said control section controls said display section based on a display process corresponding to a predetermined level of said plurality of levels in said table, and
wherein after said control section has controlled said display section based on the display process, whenever said control section detects said state transition, said control section refers to said table and gradually raises or lowers said illegibility level of the display process that is to be executed.

21. The portable information terminal as set forth in claim 20, further comprising:
opening/closing speed detection means that detects an opening/closing speed of said first housing and said second housing,
wherein said control section increases or decreases a degree of the illegibility level that is gradually raised or lowered based on an opening/closing speed detected during said state transition whenever said control section detects said state transition.

22. A screen display control method for a portable information terminal which includes: a first housing including a display section; and a second housing which is connected to said first housing, an open angle that is an angle formed by the second housing and a plane of said display section being changeable, said screen display control method comprising:
detecting an open angle of said first housing and said second housing;
causing said display section to execute a first display process if the detected open angle is equal to or greater than a threshold; and
causing said display section to execute a second display process if the detected open angle is less than the threshold,
wherein said first display process or said second display process includes a process that causes information displayed on said display section to become illegible compared to information displayed on the display section that executes the other display process.

23. A screen display control method for a portable information terminal which includes: a first housing including a display section; and a second housing which is connected to said first housing, an open angle that is an angle formed by the second housing and a plane of said display section being changeable, said screen display control method comprising:
detecting an opening/closing speed of said first housing and said second housing;
causing said display section to execute a first display process if the detected opening/closing speed is equal to or greater than a threshold; and
causing said display section to execute a second display process if the detected opening/closing speed is less than the threshold.
wherein said first display process or said second display process includes a process that causes information displayed on said display section to become illegible compared to information displayed on the display section that executes the other display process.
